# FASCICULE DE BREVET EUROPEEN

(11) **EP 0 635 397 B1**
(45) Date de publication et mention de la délivrance du brevet: **21.05.1997**
(21) Numéro de dépôt: 94401684.9
(22) Date de dépôt: 21.07.1994
(51) Int. Cl.: B60R 9/045, B60R 9/05

(54) **Porte-bagages pour véhicule automobile**
Lastträger für ein Kraftfahrzeug
Luggage carrier for an automotive vehicle

(30) Priorité: 22.07.1993 FR 9309047
(43) Date de publication de la demande: 25.01.1995
(73) Titulaire: MATRA AUTOMOBILE, 75116 Paris (FR); Etablissements FARNIER ET PENIN, F-79300 Bressuire (FR)
(72) Inventeur: Audoire, Philippe, F-78191 Trappes Cedéx (FR); Memeteau, Michel, c/o Farnier Penin, F-79302 Bressuire Cedéx (FR)
(74) Mandataire: Fort, Jacques

(56) Documents cités:
- GB-A- 2 218 062
- US-A- 4 448 337
- US-A- 4 972 983
- US-A- 4 988 026
- US-A- 5 069 377

## Description

La présente invention concerne les porte-bagages pour véhicule automobile, comprenant deux rails destinés à être fixés à plat sur la carrosserie d'un véhicule et au moins une (et en général au moins deux) traverses dont les extrémités sont constituées de façon à pouvoir coulisser sur les rails et à y être verrouillées.

On connaît déjà de nombreux porte-bagages du type ci-dessus, qui ont l'intérêt de présenter une saillie très faible lorsque les traverses sont enlevées. On connaît en particulier un porte-bagages conforme au préambule de la revendication 1 (GB-A-2 218 062).

La présente invention vise notamment à fournir un porte-bagages dont le mécanisme de verrouillage tout à la fois assure un blocage efficace et permet un coulissement facile de la traverse le long des rails, n'exigeant que des manoeuvres simples de blocage et de déblocage.

Dans ce but l'invention propose notamment un porte-bagages conforme à la revendication 1.

D'autres caractéristiques de l'invention, avantageusement utilisables en liaison avec la précédente, et dont certaines peuvent l'être indépendamment, sont définies par les sous-revendications. En particulier, pour tenir compte de ce que les utilisateurs d'un véhicule muni d'un porte-bagage, laissent généralement les traverses en place même en dehors des périodes d'utilisation, il est proposé une constitution des traverses réduisant considérablement la traînée du véhicule et le risque de sifflement gênant à vitesse élevée.

Dans ce but, lorsque le porte-bagages comporte deux traverses, ces dernières ont avantageusement des faces en regard pouvant s'appliquer directement l'une contre l'autre sur la quasi-totalité de leur longueur, de façon que les traverses constituent alors un aileron unique.

Les caractéristiques ci-dessus ainsi que d'autres apparaîtront mieux à la lecture de la description qui suit de modes particuliers de réalisation, donnés à titre d'exemples non-limitatifs. La description se réfère aux dessins qui l'accompagnent, dans lesquels :
- la figure 1 est un schéma en perspective montrant une constitution générale d'un porte-bagages de toit à laquelle est applicable l'invention, les traverses étant représentées en traits pleins dans une position optimale en dehors de périodes d'utilisation et en traits mixtes dans une position possible en vue d'une utilisation ;
- la figure 2 est une vue éclatée, en perspective, des composants concernés par l'invention d'un pied de traverse et d'un rail ;
- les figures 3 et 4 sont des vues en coupe, à grande échelle, destinées à montrer respectivement l'état déverrouillé et l'état verrouillé du mécanisme montré dans la figure 8 ;
- la figure 5 est une vue en perspective de la cage et d'un des rouleaux du mécanisme des figures 2 à 4 ;
- la figure 6 est une vue en élévation de la cage de la figure 5 ;
- la figure 7 montre la cage, en demi-vue depuis la gauche de la figure 6 et en demi-vue en coupe suivant la ligne VII-VII de la figure 6 ;
- la figure 8 est une vue en coupe suivant la ligne VIII-VIII de la figure 6
- la figure 9 est un schéma destinée à faire apparaître le fonctionnement du mécanisme de blocage ;
- la figure 10 montre une constitution possible du pied, permettant de passer une sangle de fixation de bagages ;
- les figures 11, 12 et 13, similaires aux figures 2 à 4, montrent une variante de réalisation ;
- la figure 14, similaire à la figure 3, montre une autre variante encore ;
- la figure 15 est un schéma de principe destiné à faire apparaître le mode de fonctionnement de la variante de la figure 14.

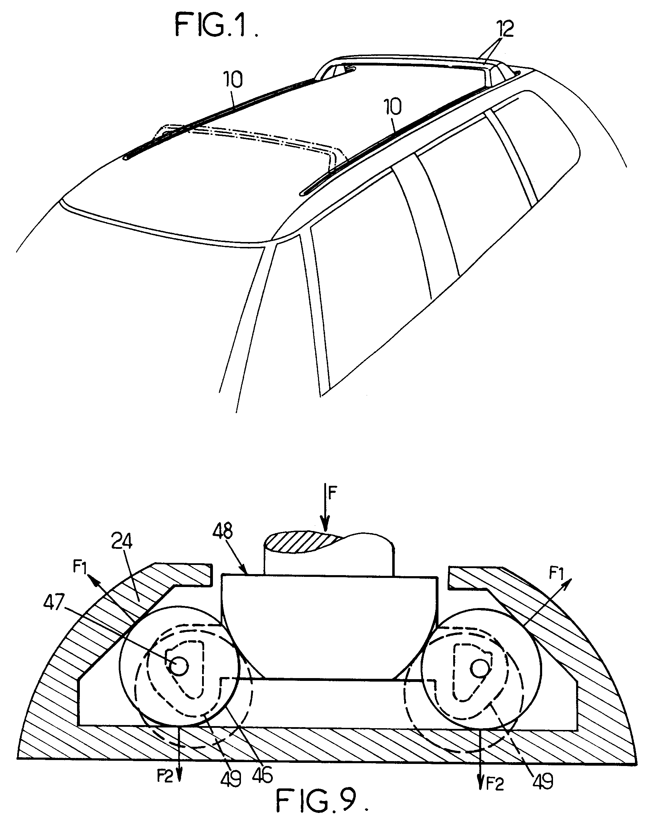

Le porte-bagages dont la constitution générale est montrée en figure 1 comporte deux rails 10 fixés à plat, par exemple par des vis, sur le pavillon d'un véhicule automobile et deux traverses 12 destinées à supporter des charges. Ces traverses sont déplaçables le long des rails 10. Elles sont représentées en traits mixtes dans une position où elles sont écartées l'une de l'autre et permettent de fixer des charges. Elles sont représentées en traits pleins dans une position où elles seront généralement placées en dehors des périodes d'utilisation et sont accolées.

De façon à éviter la présence d'une brêche qui dégraderait les caractères aérodynamiques d'un tel aileron, chaque traverse a une constitution dissymétrique. La face de chaque traverse destinée à s'appliquer contre l'autre traverse est sensiblement plane et orthogonale aux rails. Ces deux traverses ont généralement une structure identique. Cependant, pour augmenter encore le caractère aérodynamique de l'aileron, il est possible de munir leur parties courantes de carénages différents. Si les éléments de structure restent les mêmes, cette façon de faire n'augmente pas de façon appréciable les frais d'outillage, de fabrication et de stockage.

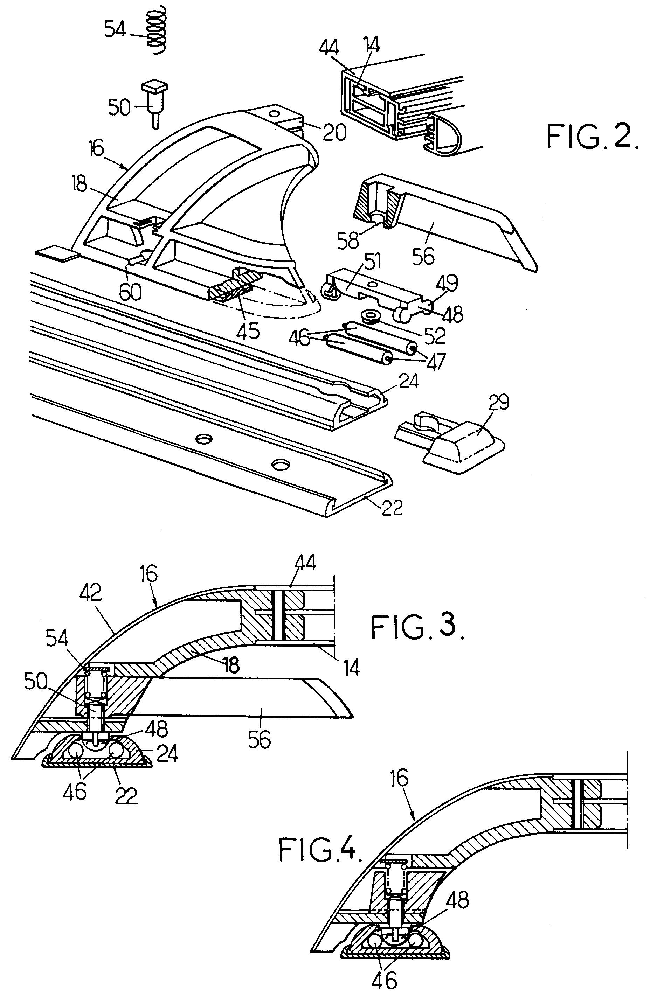

Chaque traverse présente une forme en U renversée. Comme le montre la figure 2, elle peut être considérée comme constituée d'une barre creuse horizontale ou légèrement courbe 14 formée par un profilé métallique, par exemple en alliage léger, et de deux pieds 16. Chaque pied comporte un socle 18, par exemple en métal moulé, présentant un moignon 20 d'emboîtement de la barre. Ce socle est destiné à prendre appui sur l'un des rails 10. La traverse est complétée par des caches de protection. Un cache 42 recouvre le socle. Un autre cache 44 recouvre et protège la barre. Il peut avoir une forme améliorant l'aérodynamisme de la traverse. Les caches peuvent être retenus par emboîtement et/ou par des moyens démontables, tels que des vis.

Le rail 10 est composite dans le mode de réalisation représenté. Il se compose d'une semelle allongée 22 fixée de façon rigide et permanente au pavillon du véhicule, par exemple par des vis régulièrement réparties et d'un longeron 24 retenu entre des flancs rabattus de la semelle 22. Le longeron 24, qui peut également être constitué par un profilé, définit une rainure ayant des flancs divergeant vers le bas et s'ouvrant vers le haut par une fente longitudinale. La face supérieure du longeron constitue une face d'appui pour le socle 18 du pied 16. Le rail peut être fermé par des embouts 29. Le socle 18 comporte deux tenons 45 en saillie vers le bas, traversant la fente du longeron et ayant une section droite en forme de T, dont la barre transversale peut s'appliquer contre les bords de la rainure.

Pour que la traverse soit retenue de façon positive sur les rails, chaque socle de pied peut présenter un ou plusieurs pions en saillie vers le bas, destiné à s'engager dans un des logements d'une crémaillère fixée au fond. L'espacement des logements est alors prévu de façon que l'on puisse verrouiller les traverses dans des positions où elles sont pratiquement en contact l'une avec l'autre.

Dans le mode particulier de réalisation montré en figures 2 à 4, la traverse est immobilisée par coincement de rouleaux 46, entre le fond et les flancs du longeron 24, qui délimitent une rainure à section évasée vers le bas.

Un mécanisme manuel de verrouillage et de déverrouillage comporte deux rouleaux de blocage 46, ayant des prolongements 47, emprisonnés dans la rainure du longeron 24 et placés entre les tenons. Le mécanisme comporte de plus des moyens permettant d'écarter les rouleaux et de les coincer contre les flancs et le fond du longeron. Ces moyens comportent un patin de blocage 48 ayant deux flasques terminaux 49 qui retiennent longitudinalement les rouleaux 46, ayant localement un corps 51 à profil semi-cylindrique d'action sur les rouleaux. Le patin 48 est attelé, par exemple par une rondelle crantée 52, à un axe 50 repoussé vers le bas par un ressort 54 qui prend appui sur une cloison du socle.

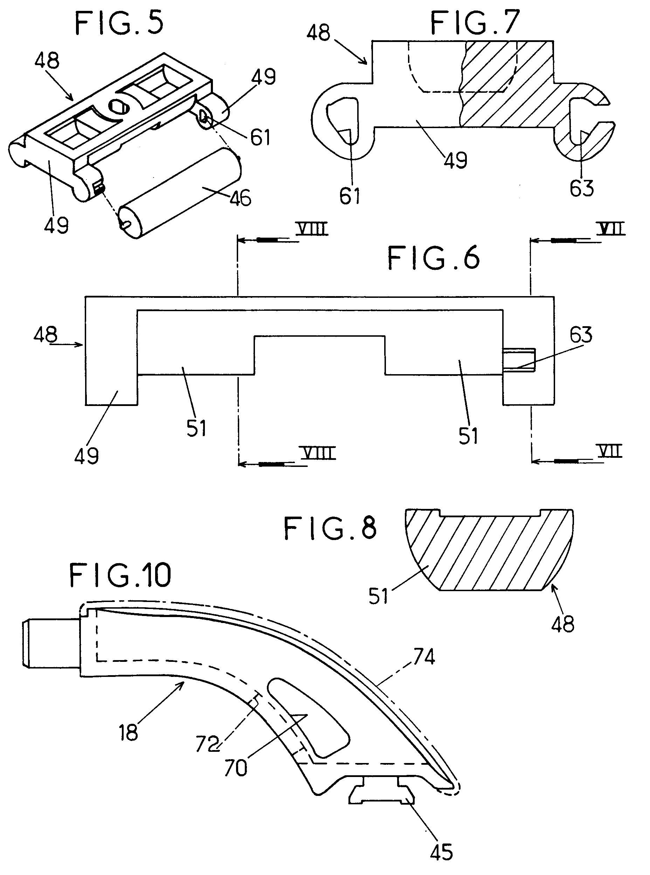

L'organe manuel de verrouillage et de déverrouillage est constitué par un levier 56 pouvant tourner de 90° entre une position où il est escamoté dans l'épaisseur du socle (figure 4) et une position où il est parallèle à la traverse (figure 3). Le levier 56 entraîne en rotation la tête carrée de l'axe 50 qui le traverse. Des moyens sont prévus pour que le levier 56 se soulève en entraînant l'axe 50 lorsqu'il passe de la position de la figure 4 à la position de la figure 3. Dans le cas illustré en figures 2 à 4, ces moyens comportent une nervure 58 du levier 56 qui se loge dans une rainure de forme correspondante 60 du socle lorsque le levier est dans la position de verrouillage. La sortie de la rainure lors de la rotation provoque le soulèvement du levier d'une hauteur suffisante pour décoincer les rouleaux 46 et faire cesser l'appui des tenons contre les bords de la fente.

Le patin 48 n'a été que schématiquement représenté sur les figures 2 à 4. Une constitution possible de ce patin 48 et des rouleaux 46 est donnée en figures 5 à 9. L'un des flasques terminaux 49 comporte deux fenêtres 61 de réception des prolongements terminaux 47 situés d'un côté des rouleaux 46. L'autre flasque 49 comporte des échancrures borgnes 63 s'ouvrant vers l'extérieur de façon à permettre d'y engager les autres prolongements des rouleaux. Le corps 51 est constitué en deux fractions de part et d'autre du plan médian.

Le mode de réglage longitudinal et de retenue des traverses apparaît à la lecture de la description qui précède.

Pour verrouiller une barre (éventuellement lorsque ses pions sont en face de logements d'une crémaillère), il suffit de mettre le levier 56 dans la position où il est représenté en figure 4. Le ressort 54 exerce alors sur le patin 51 un effort F (figure 9) qui repousse latéralement les rouleaux. Ces derniers se coincent dans le longeron 24. Il en résulte des efforts F1 et F2 symétriques, normaux aux points de contact entre rouleaux et longeron. Le blocage est réalisé par frottement des rouleaux. Ce frottement peut être accru en utilisant des rouleaux à surface striée ou crantée. L'effort peut également être ajusté par un choix approprié de l'angle entre le fond et les flancs du longeron 24. Cet angle sera généralement d'environ 45°.

Le déverrouillage s'effectue en amenant le levier 56 dans la position où il est représenté en figure 3. Les rouleaux peuvent alors venir, par rapport au patin dans la position où ils sont représentés en tirets sur la figure 9. Leur coincement cesse. La barre peut alors être déplacée longitudinalement.

En général le coefficient de frottement des rouleaux sur le longeron 24 est suffisamment faible pour que l'on puisse déplacer une barre à partir d'un seul côté du véhicule, ce qui permet à une seule personne d'effectuer le réglage de position. Les rouleaux sont en effet généralement constitués en matière plastique bien que d'autres matériaux soient utilisables. Toutefois, il est possible, pour réduire encore le frottement, de placer sur le patin un roulement à billes dont la bague externe peut rouler sur un bord ou l'autre de la fente du longeron.

Des fenêtres peuvent être ménagées dans le socle 18 pour livrer passage à des sangles de fixation de bagage. La figure 10 montre une disposition possible de telles échancrures 70 et 72. L'échancrure 72 étant côté interne, elle n'est pas recouverte par un enjoliveur éventuel de pied de traverse 74.

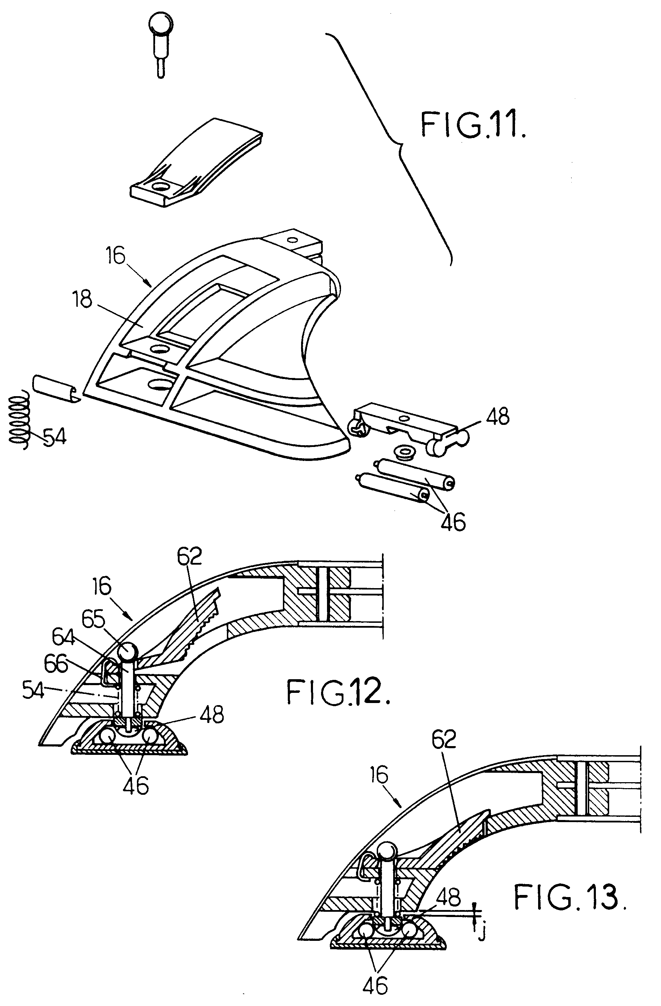

Dans le mode de réalisation montré en figures 2 à 9, le levier 56, une fois amené dans la position de déverrouillage, y reste aussi longtemps qu'il n'a pas été ramené dans la position de verrouillage. Il existe en conséquence un risque d'oubli de verrouillage d'un des deux pieds de traverse. Ce risque est écarté dans le mode de réalisation montré en figures 11 à 13, où les organes correspondant à ceux déjà décrits sont encore désignés par le même numéro de référence et ne sont représentés que schématiquement.

Le mécanisme de verrouillage montré en figures 11 à 13 comprend encore des tenons solidaires du socle 18 du pied (pouvant par exemple être surmoulés sur la partie principale du socle), des rouleaux de blocage 46 et un patin de blocage 48. Ce patin est soumis à la pression d'un ressort 54 qui tend à l'appuyer sur les rouleaux et à coincer les rouleaux, et aussi à soulever les tenons emprisonnés dans la rainure. L'organe manuel de déverrouillage est cette fois constitué par un levier 62 pouvant basculer sur le socle entre une position de verrouillage, où il est en appui contre un rebord du socle (figure 13), et une position enfoncée de déverrouillage (figure 12). Le levier 62 est attelée au patin par une tige 64 comportant une boule terminale d'appui 65 sur le levier. Lorsqu'aucune action manuelle n'est exercée sur le levier, celui-ci est en appui. L'action du ressort enfonce le patin de blocage 48 et coince les rouleaux 46. En revanche, lorsque l'utilisateur enfonce la manette et l'amène dans la position montrée en figure 12 en la faisant basculer autour d'une articulation matérialisée par une pince 66, la tige 64 soulève le patin qui libère les rouleaux.

Dans ce mode de réalisation, le déplacement de la barre exige deux opérateurs, dont chacun débloque un des pieds et le déplace. Du fait que le pied se reverrouille dès que la manette est libérée et revient dans la position montrée en figure 13, le risque qu'un patin reste déverrouillé est écarté.

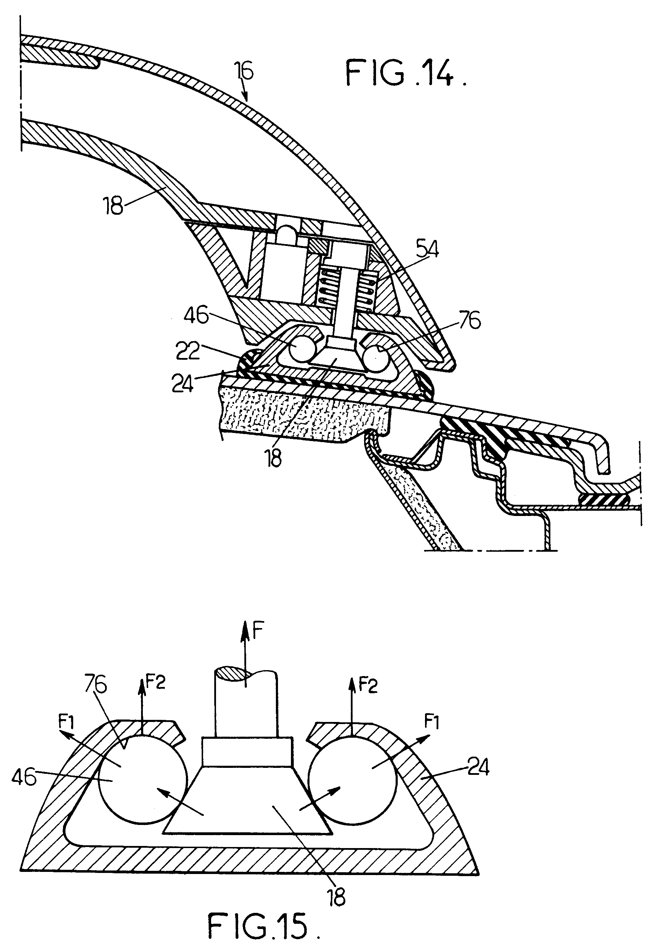

Alors que les modes de réalisation du mécanisme de verrouillage décrit jusqu'ici provoquent le coincement des rouleaux par action d'une force dirigée vers le bas, le mode de réalisation schématisé en figures 14 et 15 a une action en sens inverse. Sur la figure 14, où certains éléments ne sont pas représentés et où ceux correspondant aux modes de réalisation des figures 2 à 10 sont désignés par le même numéro de référence, le ressort 54 exerce une force F dirigée vers le haut, qui génère des forces F1 et F2 appuyant les rouleaux 46, dans des canaux 76 tournés vers le bas. Le patin 48 présente alors une forme inverse de celle utilisée dans les modes de réalisation précédents.

## Revendications

1. Porte-bagages pour véhicule automobile, comprenant :
- deux rails (10) destinés à être fixés à plat sur la carrosserie d'un véhicule, chaque rail comportant un longeron qui présente une rainure s'ouvrant vers le haut par une fente ; et
- au moins une traverse (12) qui comporte deux pieds d'extrémité (16), constitués de façon à pouvoir coulisser sur les rails, et équipés chacun d'un mécanisme de verrouillage sur des rails ;
caractérisé en ce que ledit mécanisme comporte des rouleaux (46) emprisonnés dans une rainure définie par des flancs divergeant du rail respectif, coincés contre les flancs dans une première position de l'organe de commande et libérés dans une seconde position.

2. Porte-bagages selon la revendication 1, caractérisé en ce que l'organe de commande est constitué par un levier (56) pouvant tourner sur un socle du pied (16), autour d'un axe orthogonal au longeron (24), entre une première position où il est soulevé par appui sur le socle et soulève un patin de coincement des rouleaux contre lesdits flancs qui divergent vers le bas, contre l'action de moyens élastiques (54), et une seconde position où il permet aux moyens élastiques d'enfoncer le patin (48) et de coincer les rouleaux.

3. Porte-bagages selon la revendication 1, caractérisé en ce que l'organe de commande est constitué par un levier (62) attelé à un patin (48) de blocage des rouleaux, basculable manuellement autour d'un axe parallèle au rail, contre l'action de moyens élastiques, à partir d'une position où lesdits moyens élastiques provoquent le coincement des rouleaux (46), vers une position où le patin (48) libère les rouleaux.

4. Porte-bagages selon la revendication 2 ou 3, caractérisé en ce que le levier est placé de façon à être escamoté dans l'encombrement du pied, lorsqu'il est en position de verrouillage.

5. Porte-bagages selon l'une quelconque des revendications précédentes, caractérisé en ce que la partie de chaque traverse située hors des pieds constitue une barre (14) dans laquelle les pieds sont emboîtés, enveloppée par un cache (44).

6. Porte-bagages selon l'une quelconque des revendications précédentes, caractérisé en ce qu'il comprend deux des dites traverses (12), qui comportent des faces en regard pouvant s'appliquer directement l'une contre l'autre, au moins sur la majeure partie de leur longueur, de façon que les traverses constituent un aileron unique.

## Claims

1. Luggage rack for a motor vehicle, comprising :
- two rails (10) intended to be fixed flat on the bodywork of a vehicle, each rail including a longitudinal member which exhibits a groove opening upward by means of a slot ; and
- at least one crossmember (12) which includes two end legs (16), designed so that they can slide on the rails, and each equipped with a mechanism for locking on to rails;
characterized in that the said mechanism includes rollers (46) trapped in a groove defined by divergent flanks of the respective rail, these rollers being wedged against the flanks in a first position of the control member and released in a second position.

2. Luggage rack according to claim 1, characterized in that the control member is made up of a lever (56) which can rotate on a base of the leg (16), about an axis orthogonal to the longitudinal member (24), between a first position in which it is raised by bearing on the base and raises a runner for wedging the rollers against the said flanks which diverge downward, against the action of resilient means (54), and a second position in which it allows the elastic means to push down the runner (48) and to wedge the rollers.

3. Luggage rack according to claim 1, characterized in that the control member is made up of a lever (62) coupled to a runner (48) for jamming the rollers, which can be rocked manually about an axis parallel to the rail, against the action of resilient means, starting from a position in which the said elastic means give rise to the wedging of the rollers (46), into a position in which the runner (48) releases the rollers.

4. Luggage rack according to claim 2, characterized in that the lever is placed so as to be retracted into the bulk of the leg, when it is in the locking position.

5. Luggage rack according to claim 1, characterized in that the part of each crossmember which is situated outside of the legs constitutes a bar (14) into which the legs are fitted, encased by a cover (44).

6. Luggage rack according to claim 1, characterized in that it comprises two of the said crossmembers (12), which include faces facing each other which can be applied directly against one another, at least over the most part of their length, so that the crossmembers constitute a single wing.

## Patentansprüche

1. Lastträger für ein Kraftfahrzeug, umfassend:
Zwei Schienen (10), die zur flachen Befestigung auf der Karosserie eines Fahrzeuges bestimmt sind, wobei jede Schiene einen Längsträger umfaßt, der eine Nut aufweist, die sich über ein Fenster nach oben öffnet;
zumindest eine Traverse (12), die zwei Füße an den Enden (16) umfaßt, die so ausgebildet sind, daß sie in den Schienen gleiten können und jeweils mit einem Mechanismus zur Verriegelung in den Schienen ausgestattet sind;
**dadurch gekennzeichnet, daß** dieser Mechanismus zwei Rollen (46) umfaßt, die in einer Nut gefangen sind, welche durch die divergierenden Flanken der jeweiligen Schiene definiert ist, die in einer ersten Position der Betätigungseinrichtung gegen die Flanken geklemmt sind, sowie freigesetzt in einer zweiten Position.

2. Lastträger nach Anspruch 1, **dadurch gekennzeichnet, daß** die Betätigungseinrichtung aus einem Hebel (56) besteht, der sich um eine Achse rechtwinklig zum Langsträger (24) um einen Fußsockel (16) drehen kann, zwischen einer ersten Position, in der er durch ein Auflager über den Sockel angehoben ist und eine Klemmkufe der gegen die nach unten divergierenden Flanken liegenden Rollen anhebt, entgegen der Wirkung von elastischen Einrichtungen (54), und einer zweiten Position, wo er den elastischen Einrichtungen erlaubt, die Kufe (48) einzudrücken und die Rollen festzuklemmen.

3. Lastträger nach Anspruch 1, **dadurch gekennzeichnet, daß** die Betätigungseinrichtung aus einem Hebel (62) besteht, der an eine Kufe (48) zur Blockade der Rollen angehängt ist, und der manuell um eine Achse parallel zur Schiene kippbar ist, entgegen der Wirkung von elastischen Einrichtungen, aus einer Position, in der die elastischen Einrichtungen ein Verklemmen der Rollen (46) provozieren, in eine Position, in der die Kufe (48) die Rollen freisetzt.

4. Lastträger nach Anspruch 2 oder 3, **dadurch gekennzeichnet, daß** der Hebel so plaziert ist, daß er in den Maßen des Fußes verschwindet, wenn er in Verriegelungsposition ist.

5. Lastträger nach einem der vorhergehenden Ansprüche, **dadurch gekennzeichnet, daß** derjenige Teil einer jeden Traverse, der in der Nähe der Füße angeordnet ist, einen Holm bildet, in den die Füße, umgeben von einer Verkleidung (44), eingepaßt sind.

6. Lastträger nach einem der vorhergehenden Ansprüche, **dadurch gekennzeichnet, daß** er zwei der genannten Traversen (12) umfaßt, die einander zugewandte Seiten aufweisen, die direkt aufeinander zu liegen kommen können, zumindest über den größten Teil ihrer Länge, so daß die Traversen einen einzigen Flügel bilden.
